# EUROPEAN PATENT SPECIFICATION

(11) **EP 1 432 303 B1**
(45) Date of publication and mention of the grant of the patent: **20.07.2005**
(21) Application number: 01981170.2
(22) Date of filing: 12.10.2001
(51) Int. Cl.: A01K 1/02

(54) **FARROWING DEVICE FOR A SOW WITH PIGLETS**
ABFERKELBUCHT FÜR EIN MUTTERSCHWEIN MIT FERKEL
DISPOSITIF DE MISE BAS POUR UNE TRUIE AVEC DES PORCELETS

(30) Priority: 13.10.2000 NL 1016397
(43) Date of publication of application: 30.06.2004
(73) Proprietor: Nooyen Roosters B.V., 5753 AH Deurne (NL)
(72) Inventor: NOOYEN, Antonius, Maria, Aloysius, B-3941 Hechtel-Eksel (BE)
(74) Representative: Dorna, Peter
(86) International application number: PCT/NL2001/000753
(87) International publication number: WO 2002/030179

(56) References cited:
- DE-A- 3 842 731
- DE-U- 8 625 686
- GB-A- 2 026 832

## Description

The invention relates to a farrowing device for a sow with piglets, comprising a first floor for the sow, a second floor for the piglets, which is positioned beside said first floor, an open vertical partition between spaces above said first floor and said second floor, driving means for automatically moving said first floor and/or said second floor in vertical direction relative to each other, and actuating means for actuating said driving means in dependence on the position of the sow, in such a manner that in a first, lying position of the sow, said first floor and said second floor are positioned at substantially the same vertical level, and that in a second, standing position of the sow, said second floor is positioned at a level lower than a level of said first floor.

Newborn piglets run the risk of getting trapped under the sow, and thus being killed, in particular in the first week after they are born. In professional literature, mortality rates of newborn piglets as high as 14% are reported, whereby this so-called being laid upon of the piglets is one of the main causes of death.

A farrowing device as referred to in the introduction is known from US patent specification no. 4,793,287, which discloses a farrowing device which has for its purpose to reduce the mortality rates of piglets. The farrowing device in question comprises a fixed central portion for the sow, with vertically movable lateral portions for the piglets present on either side of said central portion. Said central portion and said lateral portions are separated from each other by horizontal bars. The central portion is so dimensioned that the sow can stand as well as lie on one side. The piglets have access to the sow's teats through the horizontal bars. The central portion is fitted with a light source and a light detector, in such a manner that the light detector will not detect light from the light source when the sow is standing, whilst in the lying position of the sow, on the other hand, light from the light source will be detected by the light detector. From said detection, a computer derives a signal to control a hydraulic system by means of which the lateral portions can be moved in vertical direction. The system is controlled in such a manner that the floors of said central portion and said lateral portions will be positioned at the same level when the sow is lying, whereas the floors of the lateral portions are moved to a lower level when the sow is standing. The upright edge that is thus formed between the floors of the lateral portions and the central portion forms too large a barrier for the newborn piglets to cross, so that they cannot move from the lateral portion to the central portion, thus reducing the risk of a piglet being trapped under the sow when the sow lies down, with all the possible fatal consequences thereof. In practice it has become apparent that, in spite of a considerable reduction of the mortality rate of the piglets that is achieved with such farrowing devices, it is not possible to keep the production costs of such devices sufficiently low to make them also commercially profitable. As a result, such farrowing devices have only been used on a very limited scale, and that in particular for so-called outpatient farrowing, whereby the sow is only placed in the farrowing device very shortly before farrowing and must leave it again shortly after farrowing. During the preceding and following periods, the sow and possibly the piglets are moved to a lower-cost rearing pen. This means that the bearing sow and, at a later point in time, the sow together with her piglets, must be moved at least twice during the period before and after farrowing, which for one thing is not beneficial to the sow and her piglets hand and which for another thing is labour-intensive.

Also German patent DE 499622, British patent GB 932189 and British patent application GB 2026832 A disclose a farrowing device, wherein the floor for the piglets is movable in vertical direction. Said German patent uses a holder fitted with a weight for this purpose, which maintains the floor for the piglets in an upper position, whilst movement of the sow in upward direction can be converted, via the sow's back, into a downward movement of the floor for the piglets. Said British patent employs a vertically adjustable photocell unit, which is capable of detecting whether the sow is standing or lying. The last-mentioned British patent application discloses a farrowing device wherein a pneumatic cylinder is actuated by manual operation of an air valve, by means of which cylinder the floor for the piglets can be moved in vertical direction.

The object of the invention is to provide a farrowing device wherein the advantages as regards the reduced piglet mortality rate of the device according to US 4,793,287 are at least retained, whilst providing a technically simpler construction, which makes the device commercially exploitable, without there being a need to move the sow and possibly her piglets during the period before and after farrowing. The invention is defined by the features of independent claim 1. The dependent claims define preferred embodiments of the invention. This allows a commercially sound production of a farrowing device having the aforesaid advantages by using technically relatively simple and thus relatively low-cost means.

It is furthermore noted in this connection that US patent no. 4,793,287 makes mention of the fact that it is also possible to effect the vertical movement of the lateral portions manually. Such operation is highly impracticable and labour-intensive, since this would mean that a person would have to be permanently available for operating the lateral portions in dependence on the position of the sow.

Preferably, the mechanical switch is mounted on the first floor. Such a switch can be operated in that the sow's belly or side makes contact with the switch when the sow lies down.

In order to obtain a simple embodiment of the invention, the mechanical switch is movable between a first position and a second position.

Such a mechanical switch is preferably mechanically connected to the pneumatic valve for operating the same. Such actuation of the pneumatic valve obviates the need to use computer systems or electrical signals.

Preferably, the switch maximally extends to a height of 10 cm above the first floor. This reduces the risk of the switch being operated without the sow actually lying down. Such a situation may occur, for example, when the sow kneels down, whether or not before finally lying down.

With a view to the sow's comfort, the upper side of the switch, in the first position thereof, preferably lies at substantially the same vertical level as the first floor in the first position thereof.

For the same reason, the upper side of the switch is preferably spherical in shape.

According to a preferred embodiment, the switch is mounted in a recessed portion of the first floor, so that space for the switch itself is available below the upper level of the first floor. Such a recessed portion may for example be formed by a valley of a wave pattern which the first floor exhibits according to a preferred embodiment thereof. Such a wave pattern reduces the risk of the sow slipping and possibly landing on top of a piglet.

A constructionally simple solution can be obtained if the operating means comprises a substantially closed housing, with a driving element which is movable within the housing under the influence of gas pressure, to which there is connected a coupling member extending outside said housing, for example a rod, which is mechanically coupled to said first floor and/or said second floor.

The simplicity of the construction is achieved in particular if the driving element is a membrane.

The driving means are preferably positioned under the first and the second floor, so that they will remain out of reach of the sow and the piglets.

According to a special preferred embodiment, locking means are provided, which are capable of moving the first and/or the second floor to a desired position independently of the position of the sow. It may be desirable, for example in order to carry out veterinary activities, for the second floor to be positioned at a level lower than that of the first floor, as a result of which the freedom of movement of the piglets is considerably reduced and the piglets can be caught more easily for the purpose of carrying out said veterinary activities. On the other hand, it may also be desirable for the first floor and the second floor to be positioned at the same level, even when the sow is standing, for example when the piglets have grown so much already that the risk of their being laid upon is practically non-existent.

The locking means are preferably adapted for operating a number of farrowing devices in groups. Such operation in groups reduces the number of operations that the pig breeder is required to carry out. In general explanation it is noted in this connection that farrowing devices such as the one according to the invention are generally arranged in groups, for example in groups of sixteen farrowing devices, within a pen, wherein several such pens are available within a pig farm, so that sows that are due more or less at the same point in time can be accommodated within the same pen.

The invention will now be explained in more detail with reference to the following figures, wherein:
Figure 1 is a perspective view of the farrowing device, wherein the floor for the piglets is positioned lower than the floor for the sow;
Figure 2 is a perspective side elevation of the same farrowing device, wherein the floor for the piglets and the floor for the sow are positioned at the same vertical level;
Figure 3 is a perspective view of the bottom side of the farrowing device;
Figure 4 is a perspective view of the switch that is mounted in the floor for the sow, as well as part of said floor; and
Figure 5 is a pneumatic diagram for the farrowing device.

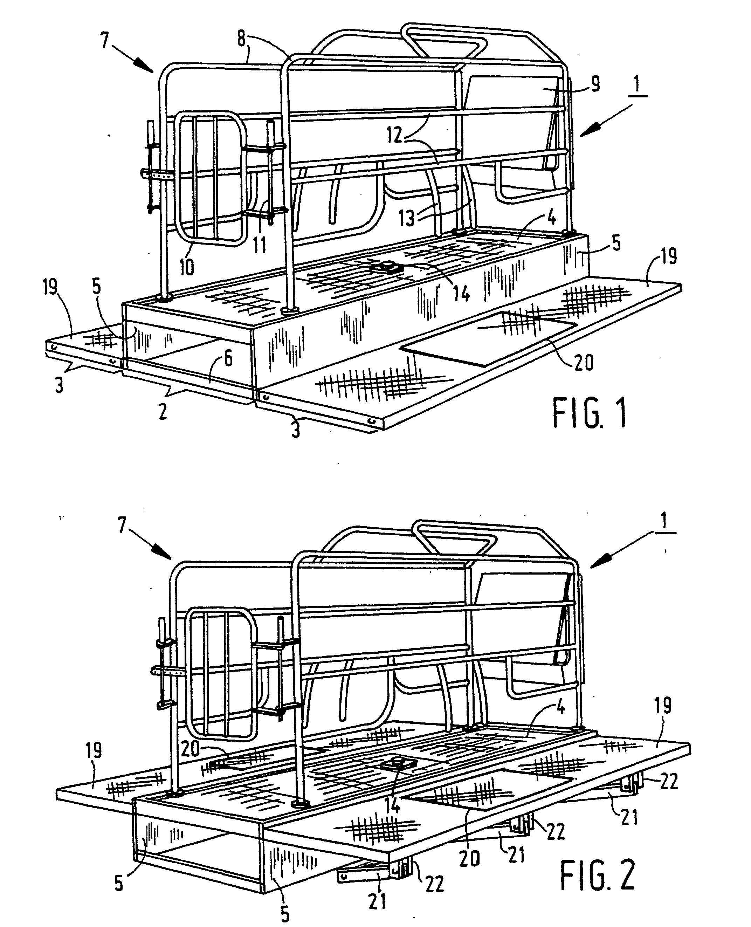

The farrowing device 1 that is shown in Figure 1 mainly consists of a part 2 for the sow and a part 3 for the piglets. In use, the farrowing device 1 will be surrounded by an upright edge or wall, which is not shown in Figure 1 for the sake of clarity. Said upright edge or wall can be formed by the walls of a pig house, for example, or by partitions that are present between neighbouring farrowing devices. Sow part 2 comprises a floor 4 for the sow, which is made up of a waving grid. Two partitions 5 extend downwards over a length of about 20 cm from the longitudinal edges of the sow floor 4. Strips 6, only one of which is shown in Figure 1, are fixed between the ends of partitions 5 with a view to providing the required stiffness. Mounted on the floor is a cage construction 7, within which the sow is present in use and on which the sow can stand and lie. Cage construction 7 consists of two longitudinal railings 8, a manger 9 on the front end side and an access gate 10, which can pivot about pin 11 so as to be opened and closed. Longitudinal railings are built up of a number of substantially horizontal and vertical tubular parts 12, 13, which are constructed in such a manner that the longitudinal railings are open in the sense that the piglets on the one hand have access to the sow's teats, whilst on the other hand the sow is barred from entering the part 3 for the piglets.

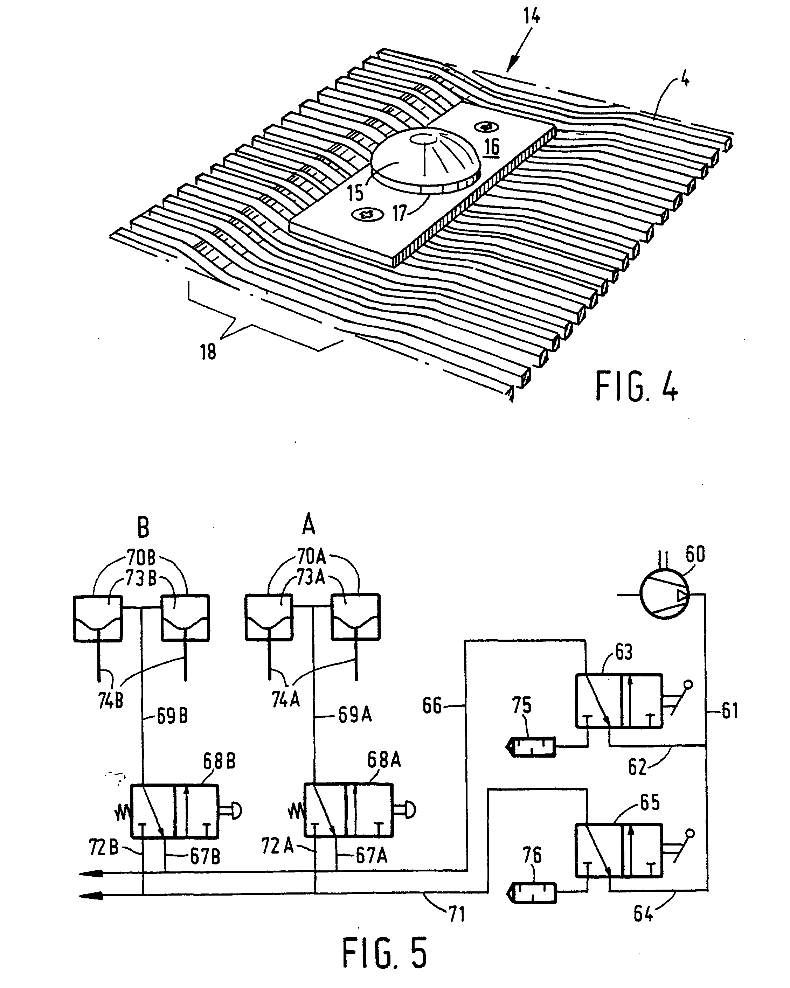

A mechanical switch 14 is mounted approximately in the centre of sow floor 4. As is shown in more detail in Figure 4, said switch 14 is fitted with a spherical contact element 15. The switch also comprises a plate 16, in which a recess 17 for the spherical contact element 15 is present. Switch 14 is mounted in a valley 18 of the wave pattern of sow floor 4.

The part 3 for the piglets mainly consists of a floor 19 for the piglets. Also said floor 19 is made up of a grid, with this understanding that it is a plasticized grid, which feels less cold for the pigs. Centrally provided in the floor 19 for the piglets is a heated portion 20, which is heated by heating means (not shown) present on the underside of the floor 19, such as a hot-water pipe, for example.

In the situation that is shown in Figure 1, the floor 19 for the piglets is positioned lower than the floor 4 for the sow. The height of the partitions 5 is such that young piglets are unable to move onto the sow floor 4 from the lower piglet floor 19, which might involve the risk of the piglets being present under the sow and getting trapped under the sow when the sow lies down. When the sow lies down, the sow's belly or side will depress switch 14, as a result of which an driving mechanism is operated, which will move the floor 19 for the piglets vertically upwards to a position level with the floor 4 for the sow. From that moment, the piglets have access to the sow's teats and they can drink without any risk. As soon as the sow stands up again, the switch will move back to its original position under the influence of spring pressure, and the floor 19 for the piglets will move downwards to the position that is shown in Figure 1.

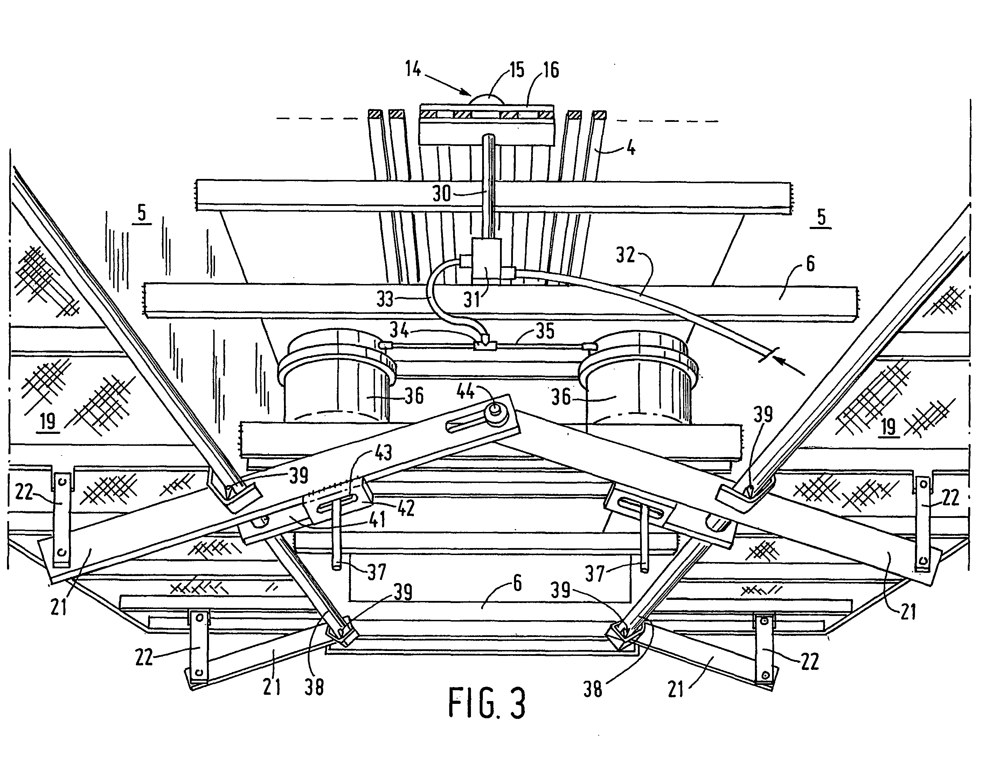

Now the operation of the farrowing device will be explained in more detail with reference to Figures 3 and 5. When switch 14 is depressed via spherical contact element 15, this results in pneumatic valve 31 being operated via rod 30, which is directly connected to contact element 15. As a result, compressed air which is present in pressure pipe 32 will be displaced to the pressure side of pressure vessels 36 via pipe 33, tee 34 and pipe 35, resulting in a pressure build-up at that location. Pressure vessels 36 are generally known, they are for example used as absorbers in trucks. Present in the pressure vessel is a membrane which, together with part of the housing of the pressure vessel, forms a closed pressure space on the side where pipe 35 is connected to pressure vessel 36. Rod 37 is connected to the membrane. A pressure change in the pressure space of the pressure vessel will result in movement of the membrane, and consequently also of rod 37, which movement will be used to move the piglet floor 19 in vertical direction. To this end, middle arm 21 is rigidly connected to shaft 38 in the centre thereof, whilst shaft 38 is connected to outer arms 21 at its ends. Pointed blocks 39 are present on the underside of shaft 38 at the location of arms 21, with the points of said blocks resting in V-shaped strip portions 40 that are fixedly connected to partitions 5. Rotation of shaft 38 does not take place about its axis, but about the point of said pointed blocks 39, as a result of which a lubrication-free situation is obtained. Mounted beside middle arm 21 is a supporting arm 41, which is likewise fixedly connected to shaft 38. A push-off block 42 is welded to the underside, between middle arm 21 and supporting arm 41, which push-off block 42 is provided with a slotted opening 43. The end of rod 37 extends through said slotted opening 43. Rod 37 is formed with a thickening directly above push-off block 42, for example in the form of a nut (not shown), whose bottom side abuts against the upper side of push-off block 42. Downward movement of rod 37 will result in arms 21 rotating about the points of blocks 39, which rotation will be converted, via arm 22, into a vertical upward translation of piglet floor 19. As soon as the pressure in the pressure space of pressure vessel 36 decreases, the floor 19 for the piglets will move downwards under the influence of the force of gravity produced by the floor 19 and the piglets present thereon, which will result in the situation as shown in Figures 1 and 3 again. The pressure in the pressure space of pressure vessel 36 will decrease as soon as the sow stands up, as a result of which the air pressure in the pressure space of pressure vessel 36 will decrease because air can escape via pneumatic valve 31. The two middle arms 21 are pivotally interconnected by means of a bolt-nut connection 44, so that the movement of floor 19 on both sides of sow floor 4 takes place in a synchronized manner. Although two pressure vessels are used in the situation that is shown in Figure 3, it stands to reason that it is also possible within the concept of the invention to achieve the same result with more pressure vessels or with fewer pressure vessels.

Figure 5 is a pneumatic diagram as can be used with a farrowing device according to the invention. Compressor 60 is connected to pneumatic main valve 63 via pipe 61, 62, and to the second main valve 65 via pipe 61, 64. First main valve 63 and second main valve 65 are both manually operated via a lever. In the illustrated position of the two main valves 63, 65, the pneumatic circuit will continue from first main valve 63, via pipe 66 and branches 67A, 67B, to valves 68A, 68B, etc. From valves 68A, 68B, etc., the circuit continues to pairs of pressure vessels 70A, 70B, etc. via pipes 69A, 69B, etc. Each pair of pressure vessels is associated with one farrowing device A, B, etc. Valves 68A, 68B, etc. are operated by means of a pushbutton. Said pushbutton can either be formed directly by spherical contact element 15, which is mounted in sow floor 4, or be directly or indirectly connected thereto by mechanical means. Within the framework of the invention it is also possible to operate valves 68A, 68B, etc. in a different manner, for example by means of an electric or pneumatic signal which is produced by switch 14.

From the second main valve 65, the pneumatic circuit continues to valves 68A, 68B, etc. via pipe 71 and branches 72A, 72B, etc. In the illustrated situation, air pressure, for example in the order of 3 - 5 bar, will be built up in pressure spaces 73A, 73B, as a result of which rods 74A, 74B will move down or stay down, so that piglet floor 19 will be placed in its upper position as a result of the operation of the mechanism as described with reference to Figure 3. When a sow which is present in farrowing device A lies down, thus operating the pushbutton of valve 68A, said valve 68A will switch to a second position. The pressure in pressure space 73 will not be maintained via branch 67A in this situation, but via branch 72A, so that the piglet floor 19 will remain in its upper position irrespective of whether the sow is standing or lying. Such a situation may be desirable, for example, when the piglets are already more than 7 days old, from which age the risk of being laid upon is considerably smaller.

When the first main valve 65 is changed over manually in comparison with the illustrated position, pipe 66 will be connected to absorber 75. When the sow is standing in farrowing device A, no pressure build-up will take place in pressure space 73A via branch 72A, nor via branch 67, but any air pressure that may be present in pressure space 73A will be released via pipe 69A, 67A, 66 and sound absorber 75. When the sow lies down, valve 68A will change over, as a result of which pressure build-up will take place in pressure spaces 73A via branch 72A, as a result of which piglet floor 19 will move up to a position level with that of sow floor 4. When the sow stands up again, the pressure will be released via absorber 75. This is the situation that will prevail during normal operation.

Precisely the reverse situation will be created by switching over the second main valve 65 in comparison with the illustrated position: when the sow is standing, sow floor 4 and piglet floor 19 will be positioned at the same level, whilst piglet floor 19 will be positioned lower than sow floor 4 when the sow is lying. Pressure release of pressure spaces 73A will take place via absorber 76. This is a situation which will not occur in practice.

When both the first main valve 63 and the second main valve 65 are operated in comparison with the illustrated situation, no pressure build-up can take place in pressure spaces 73A via pipe 66, nor via pipe 71, as a result of which piglet floor 19 will move to its lower position, irrespective of the position of the sow. Such a situation may be desirable, for example, if the piglets must be caught in order to carry out veterinary activities, such as cutting their tails or trimming their teeth.

To those skilled in the art it will be apparent that the first main valve 63 and the second main valve 65 are used for operating all the farrowing devices A, B, etc. that are connected, whilst valves 66A, 66B, etc. are only used for operating the respective associated farrowing device A, B, etc.

The dimensions that are used in the pneumatic system according to Figure 5 have been so selected that the transition between a high position and a low position of the piglet floor will take place gradually. If desired, throttle valves, which may or may not be controllable, can be incorporated in the pneumatic system in a manner which is known to those skilled in the art.

## Claims

1. A farrowing device (1) for a sow with piglets, comprising a first floor (4) for the sow, a second floor (19) for the piglets, which is positioned beside said first floor (4), an open vertical partition (12, 13) between spaces above said first floor (4) and said second floor (19), driving means (3b) for moving said first floor (4) and/or said second floor (19) in vertical direction relative to each other, and operating means (14) for operating said driving means (36) in dependence on the position of the sow, in such a manner that in a first, lying position of the sow, said first floor (4) and said second floor (19) are positioned at substantially the same vertical level, and that in a second, standing position of the sow, said second floor (19) is positioned at a level lower than a level of said first floor (4), said driving means (36) comprising a pneumatic valve (31) to be actuated by said operating means (5) and at least one driving element (37) connected to said first floor and/or said second floor, which is to be actuated by said pneumatic valve (31), **characterized in that** the operating means (14) comprise a mechanical switch (15) to be depressed by the sow for operating said driving means (36) automatically.

2. A farrowing device according to claim 1, **characterized in that** said mechanical switch (15) is movable between a lower, first position and an upper, second position.

3. A farrowing device according to claim 1 or 2, **characterized in that** said mechanical switch (15) is mounted on the first floor (4).

4. A farrowing device according to claim 1, 2 or 3, **characterized in that** said switch (15) is mechanically connected to said pneumatic valve (31) for operating the same.

5. A farrowing device according to claim 2 and claim 3 or 4, **characterized in that** said switch (15) maximally extends to a height of 10 cm above the first floor (4) in the second position of the switch (14).

6. A farrowing device according to any one of the claims 3 - 5, **characterized in that** the upper side of the switch (15) preferably lies at substantially the same vertical level as the first floor (4) in the first position of the switch (15).

7. A farrowing device according to any one of the claims 3 - 6, **characterized in that** the upper side of the switch (15) is spherical in shape.

8. A farrowing device according to any one of the claims 3- 7, **characterized in that** said switch (15) is mounted in a recessed portion (18) of the first floor.

9. A farrowing device according to any one of the preceding claims, **characterized in that** said driving element comprises a substantially closed housing (70A, 70B), with a driving body which is movable within the housing (70A, 70B) under the influence of gas pressure, to which there is connected a coupling member (74A, 74B) extending outside said housing, for example a rod, which is mechanically coupled to said first floor (4) and/or said second floor (19).

10. A farrowing device according to claim 9, **characterized in that** said driving body is a membrane.

11. A farrowing device according to any one of the preceding claims, **characterized in that** said first floor (4) exhibits a wave pattern.

12. A farrowing device according to any one of the preceding claims, **characterized in that** said driving means (36) are positioned under said first (4) and said second floor (19).

13. A farrowing device according to any one of the preceding claims, **characterized in that** locking means (63, 65) are provided, which are capable of moving the first (4) and/or the second floor (19) to a desired position independently of the position of the sow.

14. A farrowing device according to claim 13, **characterized in that** said locking means (63, 65) are adapted for operating a number of farrowing devices (1) in groups.

## Patentansprüche

1. Abferkel-Vorrichtung (1) für eine Sau mit Ferkeln, umfassend einen ersten Boden (4) für die Sau, einen zweiten Boden (19) für die Ferkel, welcher neben dem ersten Boden (4) angeordnet ist, ein offenes vertikales Abteil (12, 13) zwischen Räumen oberhalb des ersten Bodens (4) und des zweiten Bodens (19), Antriebsmittel (36) zum Bewegen des ersten Bodens (4) und/oder des zweiten Bodens (19) in vertikaler Richtung relativ zueinander, und Betätigungsmittel (14) zum Betätigen der Antriebsmittel (36) in Abhängigkeit von der Position der Sau, in der Weise, dass in einer ersten liegenden Position der Sau der erste Boden (4) und der zweite Boden (19) im Wesentlichen auf dem gleichen vertikalen Niveau angeordnet sind, und dass in einer zweiten stehenden Position der Sau der zweite Boden (19) auf einem niedrigeren Niveau gegenüber dem ersten Boden (4) angeordnet ist, wobei die Antriebsmittel (36) ein durch die Betätigungsmittel (14) betätigbares pneumatisches Ventil (31) und wenigstens ein mit dem ersten Boden und/oder dem zweiten Boden verbundenes Antriebselement (37) aufweisen, das durch das Ventil (31) betätigbar ist, **dadurch gekennzeichnet, dass** die Betätigungsmittel (14) einen mechanischen Schalter (15) umfassen, der durch die Sau eingedrückt wird, um die Antriebsmittel (36) automatisch zu betätigen.

2. Abferkel-Vorrichtung nach Anspruch 1, **dadurch gekennzeichnet, dass** der mechanische Schalter (15) zwischen einer niedrigeren ersten Position und einer höheren zweiten Position bewegbar ist.

3. Abferkel-Vorrichtung nach einem der Ansprüche 1 oder 2, **dadurch gekennzeichnet, dass** der mechanische Schalter (15) an dem ersten Boden (4) angebracht ist.

4. Abferkel-Vorrichtung nach Anspruch 1, 2 oder 3, **dadurch gekennzeichnet, dass** der Schalter (15) an dem pneumatischen Ventil (31) mechanisch angeschlossen ist, um selbiges zu betätigen.

5. Abferkel-Vorrichtung nach Anspruch 2 und Anspruch 3 oder 4, **dadurch gekennzeichnet, dass** sich der Schalter (15) maximal auf eine Höhe von 10 cm oberhalb des ersten Bodens in der zweiten Position des Schalters (15) erstreckt.

6. Abferkel-Vorrichtung nach einem der Ansprüche 3 - 5, **dadurch gekennzeichnet, dass** die obere Seite des Schalters (15) in der ersten Position des Schalters (15) vorzugsweise im Wesentlichen auf dem gleichen vertikalen Niveau liegt, wie der erste Boden (4).

7. Abferkel-Vorrichtung nach einem der Ansprüche 3 - 6, **dadurch gekennzeichnet, dass** die Oberseite des Schalters (15) eine gewölbte Gestalt hat.

8. Abferkel-Vorrichtung nach einem der Ansprüche 3 - 7, **dadurch gekennzeichnet, dass** der Schalter (15) in einem vertieften Abschnitt (18) des ersten Bodens angebracht ist.

9. Abferkel-Vorrichtung nach einem der vorangehenden Ansprüche, **dadurch gekennzeichnet, dass** die Antriebsvorrichtung ein im Wesentlichen geschlossenes Gehäuse (70a, 70b) umfasst, mit einem Antriebskörper, welcher in dem Gehäuse (70a, 70b) unter dem Einfluss eines Gasdruckes bewegbar ist und an dem ein Kupplungselement (74a, 74b) angeschlossen ist, das sich aus dem Gehäuse erstreckt, z.B. eine Stange, die mechanisch an dem ersten Boden (4) und/oder dem zweiten Boden (19) angekuppelt ist.

10. Abferkel-Vorrichtung nach Anspruch 9, **dadurch gekennzeichnet, dass** der Antriebskörper eine Membran ist.

11. Abferkel-Vorrichtung nach einem der vorangehenden Ansprüche, **dadurch gekennzeichnet, dass** der erste Boden (4) ein wellenförmiges Muster hat.

12. Abferkel-Vorrichtung nach einem der vorangehenden Ansprüche, **dadurch gekennzeichnet, dass** die Antriebsmittel (36) unter dem ersten Boden (4) und dem zweiten Boden (19) angeordnet sind.

13. Abferkel-Vorrichtung nach einem der vorangehenden Ansprüche, **dadurch gekennzeichnet, dass** Stellglieder (63, 65) vorgesehen sind, die dafür geeignet sind, den ersten Boden (4) und/oder den zweiten Boden (19) in eine gewünschte Position unabhängig von der Position der Sau zu bewegen.

14. Abferkel-Vorrichtung nach Anspruch 13, **dadurch gekennzeichnet, dass** die Stellglieder (63, 65) zum Betreiben eine Anzahl von Abferkel-Vorrichtungen (1) in Gruppen bestimmt sind.

## Revendications

1. Dispositif de mise bas (1) pour une truie avec porcelets, comprenant un premier plancher (4) pour la truie, un second plancher (19) pour les porcelets, qui est positionné à côté du dudit premier plancher (4), une cloison verticale ouverte (12, 13) entre les espaces situés au-dessus desdits premier plancher (4) et second plancher (19), un moyen d'entraînement (36) pour déplacer ledit premier plancher (4) et/ou ledit second plancher (19) dans une direction verticale l'un par rapport à l'autre, et des moyens de mise en oeuvre (14) pour mettre en oeuvre lesdits moyens d'entraînement (36) en fonction de la position de la truie, de telle façon que dans une première position, allongée, de la truie, ledit premier plancher (4) et ledit second plancher (19) soient positionnés à un niveau vertical substantiellement identique, et que dans une seconde position, debout, de la truie, ledit second plancher (19) soit positionné à un niveau plus bas qu'un niveau dudit premier plancher (4), ledit moyen d'entraînement (36) comprenant une vanne pneumatique (31) qui doit être actionnée par ledit moyen de mise en oeuvre (14), et au moins un élément d'entraînement (37) connecté audit premier plancher et/ou audit second plancher, qui doit être actionné par ladite vanne pneumatique (31), **caractérisée en ce que** le moyen de mise en oeuvre (14) comprend un commutateur mécanique (15) qui doit être appuyé par la truie pour mettre en oeuvre automatiquement le moyen d'entraînement (36).

2. Dispositif de mise bas selon la revendication 1, **caractérisé en ce que** ledit commutateur mécanique (15) est déplaçable entre une première position, basse, et une seconde position, haute.

3. Dispositif de mise bas selon l'une des revendications 1 ou 2, **caractérisé en ce que** ledit commutateur mécanique (15) est monté sur le premier plancher (4).

4. Dispositif de mise bas selon à l'une des revendication 1, 2, ou 3, **caractérisé en ce que** ledit commutateur (15) est connecté mécaniquement à ladite vanne pneumatique (31) pour actionner celle-ci.

5. Dispositif de mise bas selon l'une des revendication 1, 2, 3 ou 4, **caractérisé en ce que** ledit commutateur (15) se prolonge de façon maximale à une hauteur de 10 cm au-dessus du premier plancher (4) dans la seconde position du commutateur (15).

6. Dispositif de mise bas selon l'une quelconque des revendications 3 à 5, **caractérisé en ce que** la face supérieure du commutateur (15) se situe préférablement à un niveau vertical sensiblement identique à celui du premier plancher (4) dans la première position du commutateur (15).

7. Dispositif de mise bas selon l'une quelconque des revendications 3 à 6, **caractérisé en ce que** la face supérieur du commutateur (15) est de forme sphérique.

8. Dispositif de mise bas selon l'une quelconque des revendications 3 à 7, **caractérisé en ce que** ledit commutateur (15) est monté sur une partie en retrait (18) du premier plancher.

9. Dispositif de mise bas selon l'une quelconque des revendications précédentes, **caractérisé en ce que** ledit élément d'entraînement comprend un boîtier (70A, 70B) sensiblement fermé, avec un corps d'entraînement qui est déplaçable à l'intérieur du boîtier (70A, 70B) sous l'influence d'une pression de gaz, auquel est connecté un élément de liaison (74A, 74B) se prolongeant à l'extérieur dudit boîtier, par exemple une tringle, qui est mécaniquement couplé audit premier plancher (4) et/ou audit second plancher (19)

10. Dispositif mise bas selon la revendication 9, **caractérisé en ce que** ledit corps d'entraînement est une membrane.

11. Dispositif de mise bas selon l'une quelconque des revendications précédentes, **caractérisé en ce que** ledit premier plancher (4) présente un motif ondulé.

12. Dispositif de mise bas selon l'une quelconque des revendications précédentes, **caractérisé en ce que** ledit moyen d'entraînement (36) est positionné sous lesdits premier plancher (4) et second plancher (19).

13. Dispositif de mise bas selon l'une quelconque des revendications précédentes, **caractérisé en ce que** des moyens de verrouillage (63, 65) sont prévus, lesquels sont capables de déplacer le premier plancher (4) et/ou le second plancher (19) vers une position désirée, indépendamment de la position de la truie.

14. Dispositif de mise bas selon la revendication 13, **caractérisé en ce que** lesdits moyens de verrouillage (63, 65) sont adaptés à la mise en oeuvre d'un certain nombre de dispositifs de mise bas (1) en groupes.
